# EUROPEAN PATENT SPECIFICATION

(11) **EP 4 038 548 B1**
(45) Date of publication and mention of the grant of the patent: **05.11.2025**
(21) Application number: 20796920.5
(22) Date of filing: 22.09.2020
(51) Int. Cl.: G06K 19/06, B29D 30/72, B32B 3/26, B32B 7/023, B32B 25/04, B32B 25/12, B32B 25/14, B32B 25/16, B32B 25/18, B29D 30/00, B60C 13/00

(54) **A PROCESS FOR MANUFACTURING A TYRE**
VERFAHREN ZUR HERSTELLUNG EINES REIFENS
PROCÉDÉ DE FABRICATION D'UN PNEU

(30) Priority: 04.10.2019 IT 201900018020
(43) Date of publication of application: 10.08.2022
(73) Proprietor: Pirelli Tyre S.p.A., 20126 Milano (IT)
(72) Inventor: DE CANCELLIS, Pier Luigi, 20126 Milano (IT); BALINI, Alfredo, 20126 Milano (IT); DALL'ABACO, Davide, 20126 Milano (IT); MAZZUCATO, Angelo, 20126 Milano (IT)
(74) Representative: Susanetto, Carlo
(86) International application number: PCT/IB2020/058846
(87) International publication number: WO 2021/064517

(56) References cited:
- EP-A1- 0 306 117
- EP-B1- 0 306 117
- WO-A2-2007/011456
- CN-A- 1 664 854
- CN-U- 203 300 136
- JP-A- S5 836 710

## Description

The present invention relates to a process for manufacturing a tyre for vehicle wheels wherein a label is applied to the tyre, particularly during the step of moulding and vulcanizing the tyre.

A tyre generally comprises a carcass structure which is formed toroidally about an axis of rotation and which includes at least one carcass ply which has end edges which are engaged in respective annular anchoring structures, known as bead cores.

In a radially external position with respect to the carcass structure, there is provided a belt structure comprising, in the case of car tyres, at least two radially superimposed strips of rubberized fabric which is provided with reinforcement cords and, preferably, also a third layer of textile or metal cords which are arranged circumferentially (at zero degrees) at least at the ends of the belt strips underneath, in a radially external position. In a radially external position with respect to the belt structure, there is applied a tread band which is made from elastomer material and on which there is defined a tread surface which is intended for contact with the road surface.

In an axially external position with respect to the carcass structure, there are further applied two sidewalls which extend from the tread band as far as the radially internal ends of the tyre and which are defined by a layer of rubberized ply (beads) which surrounds the bead cores.

The process for manufacturing a tyre generally provides for a building step, in which the various components of the tyre itself are constructed and assembled, and a subsequent moulding and vulcanization step for the tyre which is intended to define the structure of the tyre and particularly of the tread band and the sidewalls thereof.

To this end, the tyre which is built but not yet moulded and vulcanized (so-called "green" tyre) is closed inside a vulcanization mould and subjected for a suitable period of time to temperature conditions so as to bring about the desired degree of cross-linking of the elastomer material.

Furthermore, during this step, the green tyre is pressed against the internal surfaces of the vulcanization mould which are advantageously formed in accordance with the geometry and the configuration which are intended to be conferred on the external surfaces of the tyre.

In particular, there are defined during the moulding step the form and the arrangement of channels, notches and blocks which are formed on the tread surface and which are generally referred to as the "tread pattern" and which contribute to a great extent to determining the behaviour of the tyre on different road surfaces.

Furthermore, there are generally formed on the internal surfaces of the mould portions in contact with the sidewalls of the tyre (the "sidewall plates" of the mould) alphanumeric and/or illustrative characters which, as a result of the moulding step, remain imprinted in the sidewalls of the tread band in order to allow the immediate utilization for the users of important information items, such as the brand, model, logo, measurements and performance characteristics of the tyre.

Additional information items in encoded form may further be set out on the sidewalls of the tread band of the tyre, for example, in the form of bar codes or matrix codes. Matrix codes, more commonly known as "QR codes", are further always more appreciated as a result of the greater quantity of information which they can contain for the same occupied surface.

Furthermore, the diffusion of applications which allow them to be read by means of portable electronic devices in common use, such as smartphones, has further promoted the use of this type of code.

QR codes are formed by a matrix of standard dimensions, typically square, inside which there are suitably arranged two pluralities of elementary units which have different optical properties, generally small squares of contrasting colours (for example, white and black, or, more generally, light and dark). The different optical properties allow the identification of the type of elementary units by an optical reader which provides for them to be converted into binary code and therefore for decoding the information.

The information items set out in encoded form on the sidewalls of the tyre may comprise several tens of parameters describing the product, such as, for example, the dimensions, the load index, the speed index, the seasonality and the type of the tyre. These information items may further comprise details which relate to the production date of the tyre, typically the working week, which, however, require continuous updating. For this reason, forming such codes directly on the internal surface of the cheek of the stamp is very complex.

In order to overcome this disadvantage, different solutions have been developed.

In a first process, there is provision for the code to be moulded on the sidewall of the tyre to be formed on an insert which is removably engaged in a seat which is formed in a sidewall plate of the mould. In this case, there are suitably formed on the surface of the insert intended to come into contact with the sidewall of the green tyre during the moulding step projections and/or recesses which are capable of producing on the surface of the sidewall of the tyre corresponding recesses and/or projections. The recesses or the projections present on the surface of the sidewall of the tyre reflect the light in different manners with respect to the surface without any such projections or recesses, defining a corresponding plurality of surface portions of the sidewall which are lighter or darker with respect to the smooth surface which surrounds them.

In this manner, an optical reader can recognize lighter areas and darker areas and can associate each of these areas (which may actually be associated with pixels) with a type of elementary units of a QR code.

This solution allows the code which is intended to be moulded on the sidewall of the tyre to be modified by replacing the insert, an operation which is clearly less complex than modifying the internal surface of the entire sidewall plate.

In a second known process, there is provision for the encoded information items to be cut by laser directly in the sidewall of the tyre once the tyre is vulcanized and removed from the mould. An example of process of this type is disclosed in JPS5836710.

In another known process, which is also intended to set out the information items on the sidewall without involving the mould, there is provision for the information items, in place of being formed in bas-relief (or in relief) on the sidewall of the tyre (by means of moulding or laser cutting), to be set out beforehand on a label which is then applied to the sidewall of the tyre.

In fact, in this case, the label is used as a common printing medium and the information items (lettering, logos or barcodes or QR codes) are printed with an ink jet printing technique or laser printing technique, as in the common printing on paper. Therefore, the information items are set out on the external surface of the label in a co-planar manner relative thereto without forming recesses or projections. These types of labels are also known as 2D or two-dimensional labels.

The 2D labels are then fixed to the sidewall of the green tyre before it is vulcanized, generally by means of adhesive-bonding, in such a manner that the temperature and pressure conditions inside the mould lead to an effective integration of the label in the sidewall and the levelling thereof with the external surface of the sidewall. In a variant of this process, there is provision for the two-dimensional labels to be co-vulcanized in the mould together with the elastomer compound of the sidewall.

The term "information" (or "information portion") set out on a label or on a sidewall of a tyre is intended to be understood to refer to any information (or a portion thereof) conveyed to a user, directly or indirectly, in relation to the tyre, such as, for example, the model, mark, dimensions, manufacturer, performance characteristics, methods and conditions of use. The information may be directly usable by a user, such as, for example, a sequence of alphanumeric characters or a logo or a symbol, or may be set out in encoded form, such as, for example, a barcode or a QR code, which can be read by means of a suitable reader which further provides for converting the encoded information into directly usable information.

The term "vulcanization" is intended to be understood to be the cross-linking process between polymer molecules of an elastomer material. Conventionally, the vulcanization of rubber is obtained by forming sulphur bridges between the polymer molecules, but, in the present context, it is also intended to extend to other possible cross-linking agents and other cross-linking methods.

The terms "vulcanization" and "cross-linking" are used interchangeably.

The degree of vulcanization of an elastomer material is determined in accordance with the international standard ASTM D5289, which correlates the degree of vulcanization with a rheometric curve. This curve depicts the progression over time of the viscosity of an elastomer material compound during the vulcanization step thereof, wherein the viscosity is indicated by means of a parameter correlated therewith, such as, for example, the torque of a rheometer positioned in the elastomer material compound.

The rheometric curve typically has a characteristic progression which starts from an initial value, decreases as far as a minimum value (also referred to as "ML"), which may be considered to be the value corresponding to the start of the cross-linking reaction, in order then to increase up to a maximum value (also referred to as "MH"), which may be considered to be the value corresponding to the complete cross-linking of the elastomer material.

Knowing the minimum value and the maximum value of the curve, therefore, it is also possible to determine any intermediate value which is made to correspond to the degree of vulcanization.

For example, if the initial value of the rheometric curve is equal to 45, the minimum value (ML) of the curve is equal to 40 and the maximum value of the curve (MH) is equal to 120, a value equal to 80 corresponds to a degree of vulcanization of (80-40)/(120-40)=50%.

In particular, the degree of vulcanization is commonly expressed in terms of time necessary for reaching the value of the rheometric curve corresponding thereto, thus, with reference to the example of the preceding paragraph, the time necessary for reaching the maximum value 120 corresponds to T₁₀₀, and the time necessary for reaching the value 80 corresponds to T₅₀.

In a generally similar manner, for any elastomer material compound and for any vulcanization temperature, therefore, it is possible to identify any generic time Tₙ, with n being between 0 and 100, corresponding to a respective degree of vulcanization of the elastomer material compound. For example, times T₃₀, T₄₀, T₅₀, T₆₀ and T₉₀ can be identified.

In the relevant technical sector, there is often cited the parameter T₉₀ which is generally considered to be the best compromise between the mechanical characteristics obtained at a predetermined degree of vulcanization and the time necessary for reaching the degree of vulcanization.

The term "phr" (parts per hundred rubber) with reference to the quantity of a specific ingredient in an elastomer material compound, is intended to mean the number of parts by weight per 100 parts by weight of elastomer material present in the compound.

CN203300136U and DE2617678 disclose examples of labels for tyres according to the prior art.

The Applicant has previously observed that two-dimensional or 2D labels, in which the information items are simply printed on the external surface by means of colours or inks without any provision of recesses, are subjected to damage which, over time, may seriously compromise the functionality thereof.

For example, the information items on the labels can be compromised by exposure to atmospheric agents, in particular to sunlight, which may modify or discolour the material used in the writing of the information items on the external surface of the label (ink or toner).

Furthermore, they can readily be damaged by the mechanical wear caused by possible friction of the sidewall of the tyre.

Another disadvantage encountered by the Applicant involves the fact that over time some substances present in the elastomer material compound of the sidewall of the tyre, typically mineral oils, tend to migrate inside the label, also reaching the external surface thereof. This phenomenon which is known as "exudation" causes the formation of stains on this external surface which, in addition to being very unpleasant aesthetically, negatively influence the intelligibility of the information set out on the label, compromising the functionality thereof.

Therefore, the Applicant has particularly established that the information items formed on a label by forming on an external surface thereof recesses which are suitably formed have a durability over time and a resistance which are greater than 2D labels.

However, the Applicant has found that the label, or at least the outermost layer thereof, on which there are formed the recesses which define the information to be conveyed has to be sufficiently stable under the conditions of vulcanization and moulding of the tyre so as not to be subjected to such changes as to modify the form or the dimensions of the recesses and consequently to alter or make the information items conveyed thereby unusable.

A first solution to this problem is to use labels, the external layer of which is produced with materials different from that of the sidewall of the tyre. However, this introduces an undesirable non-homogeneity into the structure of the sidewall of the tyre because the region in which the label is present has mechanical and chemical characteristics which are non-uniform in relation to the remaining portion of the sidewall.

Therefore, the Applicant has felt the need to provide a label, on which the information or the information portion to be conveyed is supplied by means of a plurality of recesses which are formed on an external surface thereof and which is capable of maintaining the individual characteristics of visibility and intelligibility for a sufficiently long time.

Therefore, the Applicant has perceived that, in order to obtain a label which complies with these requirements, it is possible to use a label which is suitably provided with recesses and which comprises at least one layer of elastomer material which, though maintaining adequate compatibility with the elastomer material of the sidewall, acts as a barrier to the migration of the oily substances.

Finally, the Applicant has found that a label provided with a plurality of recesses which are formed in an external surface thereof and which comprise at least a first layer constructed from an elastomer material which has a quantity of halogenated isobutylene polymer greater than 5 phr has adequate compatibility with the elastomer material of the sidewall and is capable of limiting substantially the migration of oily substances from the sidewall towards the external surface of the label.

In particular, in a first aspect thereof, the invention relates to a process for manufacturing a tyre for vehicle wheels according to claim 1.

There is thereby obtained a tyre, in which the label is completely integrated in the sidewall, with the respective external surfaces being coplanar and continuous, and in which the information or the portion of information defined by the plurality of recesses remains protected, clearly visible and capable of preventing the exudation of oily substances from the sidewall of the tyre, ensuring the maintenance over time of the intelligibility of the information set out thereon.

Indeed, thanks to the above feature, the label has a particular resistance to the migration therein of some substances which are present in the polymer compound of the sidewall, in particular oils, which, by appearing at surfaces (exudation), can "stain" the label, impairing the capacity to be read and the recognisability of the information conveyed.

In a second aspect thereof, which is not part of the present invention, relates to a process for manufacturing a label.

Preferably, said process comprises providing in said label at least a first layer of elastomer material comprising a quantity of a halogenated isobutylene polymer greater than 5 phr.

Preferably, said process comprises forming a plurality of recesses in an external surface of said label.

Preferably, said plurality of recesses are generally capable of defining at least one portion of information which is set out on said label.

There is thereby obtained a label having the advantageous characteristics described above with reference to the first aspect of the invention.

The present invention may have, in at least one of the above-mentioned aspects, at least one of the additional preferred features set out below.

In a preferred embodiment, said elastomer material of which said first layer is made comprises a quantity of said halogenated isobutylene polymer greater than 10 phr, more preferably greater than 30 phr.

In this manner, the phenomenon of exudation of the oils from the sidewall is substantially limited.

In a preferred embodiment, said elastomer material of which said first layer is made comprises at least one diene polymer and said halogenated isobutylene polymer at a weight ratio between 20/80 and 80/20. Even more preferably, this weight ratio is between 40/60 and 60/40.

In this manner, the elastomer material of which the first layer is made has optimum characteristics of resistance to the migration of the oily substances and, at the same time, optimum characteristics of compatibility with the elastomer material, of which the sidewall of tyre is made, increasing the mutual adhesion thereof.

Preferably, said diene polymer is selected from polybutadiene (BR), styrene butadiene copolymer (SBR) and natural rubber (NR), more preferably it is natural rubber.

Preferably, said halogenated isobutylene polymer is based on isobutylene bromide.

There is thereby obtained a better integration between the diene polymer and the halogenated isobutylene polymer.

In a preferred embodiment, said first layer is partially vulcanized and has a degree of vulcanization corresponding to a value between T₃₀ and T₆₀, more preferably between T₄₀ and T₅₀.

Preferably, the values T₃₀, T₄₀, T₅₀ and T₆₀ with which the degree of vulcanization is evaluated are defined by means of the international standard ASTM D5289.

In this manner, the recesses can be advantageously formed in the first layer. In fact, as a result of the stability conferred on the first layer by the partial vulcanization thereof, the recesses maintain their own individual shape even when the label is subjected to the temperatures and pressures typical of the vulcanization and moulding process of the tyre, so as not to be closed when compressed against the internal wall of the mould.

Furthermore, the vulcanization thereof being only partial, when the label is subjected to the temperatures and pressures typical of the vulcanization and moulding process of the tyre, the first layer completes the individual vulcanization step so that some of the polymer molecules thereof also form cross-linking bridges with polymer molecules of the sidewall, achieving a secure and effective integration between the label and the sidewall.

In a preferred embodiment, an internal surface opposite said external surface is defined on said label and said recesses are not open at said internal surface.

In this manner, the recesses being open at the external surface of the label but closed at the internal surface, the surfacing of elastomer material of the sidewall through the recesses (which, in this case, would become through-holes) as far as the external surface, is prevented.

In one embodiment, the label has a thickness between 0.5 and 1.5 mm.

In this manner, the thickness of the label is sufficient to form recesses with an adequate depth in the external surface.

Preferably, the label has a thickness less than 50% of the thickness of said sidewall, more preferably less than 30% of the thickness of said sidewall.

In this manner, the thickness of the label is sufficiently small with respect to the sidewall not to bring about noticeable non-homogeneities in the sidewall, particularly in terms of reducing the mechanical characteristics thereof.

Preferably, said recesses have a depth between 40% and 80% of the thickness of said label.

In this manner, the label maintains sufficient consistency and mechanical strength, in particular in relation to breakage, also in the region of the recesses.

In an embodiment, said recesses are substantially identical.

In this manner, each recess may form an elementary unit of an image, that is to say, a pixel, which can be used in the composition of the information to be conveyed, whether or not it is in encoded form.

Preferably, said recesses have a substantially frustoconical profile which tapers from said external surface towards the inside of said label or first layer.

Preferably, said recesses extend over a depth between 0.4 and 0.7 mm.

Preferably, said recesses have a base with a diameter between 0.4 and 0.5 mm.

In this manner, the recesses are particularly suitable for forming elementary units of an image which defines a QR code.

Preferably, said recesses form a QR code.

Preferably, said elastomer material of which said first layer is made comprises a vulcanizing agent in a quantity between 0.3 and 3.0 phr, more preferably in a quantity between 0.3 and 2.0 phr.

More preferably, the concentration of vulcanizing agent in the elastomer material from which said first layer is made is less than the concentration of vulcanizing agent in the elastomer material from which said sidewall is made. For example, the vulcanizing agent in the elastomer material of the first layer may correspond to approximately 70% to 90% of the concentration of the vulcanizing agent in the elastomer material of the sidewall.

In this manner, the label is prevented from being excessively cross-linked, in particular in the region of the interface surface with the sidewall, and therefore excessively rigid with respect to the material of the sidewall. In fact, this would increase the risk of detachment of the label from the sidewall.

More preferably, said vulcanizing agent is based on sulphur.

Preferably, said elastomer material from which said first layer is made comprises compounds which accelerate the vulcanization and which are selected from sulphenamides, thiazoles, sulphenimides, alkylphenol disulphides, alkyl aryl thiosulphates, thiurams and carbamates.

Examples of sulphenamides are the compounds known by the abbreviations CBS or TBBS, an example of thiazole is the compound known by the abbreviation MBTS, an example of sulphenimides is the compound known by the abbreviation TBSI, while examples of alkylphenol disulphides are the compounds known by the commercial abbreviations Vultac 5 or 7 or TB710.

For example, the compounds which accelerate the vulcanization are present in the elastomer material from which said first layer is made in a quantity between 0.5 and 1.5 phr.

Preferably, said elastomer material of which said first layer is made comprises antioxidant agents in a quantity between 1 phr and 10 phr.

Preferably, said antioxidant agents are selected from the cyclical acetal compounds, alkylphenol compounds and microcrystalline paraffin wax.

A preferred example of a cyclical acetal compound is 3,9-di-3-cyclohexene-1-il-2,4,6,10-tetraoxaspiro[5.5]undecane (marketed, for example, under the name "Vulkazon AFS"), and an example of an alkylphenol compound is the compound known by the abbreviation BHT.

In this manner, the label is particularly resistant to the effects of polymer degradation as a result of the atmospheric agents, in particular ozone.

The above-mentioned antioxidant compounds are advantageously compounds which do not become discoloured over time, unlike other antioxidant compounds, which are perhaps more effective and common and which over time tend to form undesirable brown or blue colour stains.

The use of the above-mentioned antioxidant compounds which are even less efficient than other compounds is in any case completely satisfactory because there is present in the elastomer compound the halogenated isobutylene polymer which generally has ageing characteristics which are better with respect to diene polymers.

Preferably, said elastomer material from which said first layer is made comprises, as a mineral filler, carbon black and/or silica in a quantity between 30 phr and 70 phr.

There is thereby obtained an optimum mechanical strength (mainly as a result of the presence of silica) and an additional protection from UV radiation (mainly as a result of the presence of carbon black).

In an embodiment, said at least one first layer has a surface extent equal to the surface extent of said label.

In this manner, the first layer protects the entire external surface of the label from the migration of the oily substances.

In an embodiment, said at least one first layer comprises said external surface.

In this manner, the first layer constitutes the outermost layer of the label, where the recesses which form the information are formed.

In an embodiment, said at least one first layer comprises said internal surface.

In this manner, the first layer constitutes the innermost layer of the label.

Alternatively, the first layer can be interposed between an outermost layer and an innermost layer.

In an embodiment, said first layer comprises both said external surface and said internal surface of said label.

In this manner, the label is formed only by the first layer.

Preferably, said first layer is substantially of the same colour as said sidewall.

In this manner, when the first layer comprises the external surface of the label, the label remains indistinguishable from the sidewall, at least with a new tyre, making it aesthetically more homogeneous.

In an embodiment, there is provision for the label to comprise at least one second layer of elastomer material which is different from said first layer.

In this case, the second layer may have a composition and characteristics which are different from the first layer so as to comply with different requirements and functionalities.

For example, if the first layer comprises the external surface and the second layer is coupled to the first layer at the side opposite this surface, the second layer may have a different colouration from that of the first layer and the recesses can be formed in the first layer as through-recesses so as to make the second layer underneath visible.

In this manner, it is possible to form on the sidewall of the tyre lettering, codes, symbols or designs having a different colour from the tyre, at the same time maintaining an adequate degree of protection for the information.

In an embodiment, said second layer and said first layer have the same composition, with the exception of the colouration.

Preferably, at least said first layer is obtained by calendering.

In an embodiment, said recesses are formed in said at least one first layer.

Preferably, before said recesses are formed, said at least one first layer is partially vulcanized until a degree of vulcanization corresponding to a value between T₃₀ and T₆₀ is obtained.

In an embodiment, said partial vulcanization is obtained by heating said first layer to a temperature between 140°C and 200°C, more preferably between 150°C and 170°C.

In an embodiment, said partial vulcanization is obtained by heating said first layer to the temperatures indicated above for a time between 20 seconds and 12 minutes, inversely to the vulcanization temperature, more preferably for a time between 90 seconds and 6 minutes.

Preferably, before being partially vulcanized, said at least one first layer is coupled to a support film at the side opposite said external surface.

In this manner, the first layer also has sufficient rigidity, consistency and dimensional stability when the elastomer material from which it is made is still green.

Preferably, said support film is coupled to said first layer during said calendering.

Preferably, said support film is constructed from material which is not subjected to relevant shrinkage or deformations at the temperatures to which said first layer is subjected during said partial vulcanization.

Preferably, said support film is based on polyethylene terephthalate (PET).

In an embodiment, said plurality of recesses are obtained by means of laser processing.

Preferably, before being coupled to said sidewall, said first layer is detached from said support film.

The features and advantages of the invention will be better appreciated from the detailed description of a number of preferred embodiments thereof, which are illustrated by way of non-limiting example with reference to the appended drawings, in which:
- Figure 1 is a schematic, perspective front view of a first embodiment of a label for tyres of vehicle wheels which is used in a process for manufacturing tyres according to the present invention;
- Figure 2 is a schematic, longitudinal section along the line II-II of a portion of the label of Figure 1;
- Figure 3 is a schematic side view of a portion of a sidewall of a vulcanized tyre which is provided with the label of Figure 1;
- Figure 4 is a schematic, longitudinal section of a second embodiment of a label for tyres of vehicle wheels which is used in a process for manufacturing tyres according to the present invention.

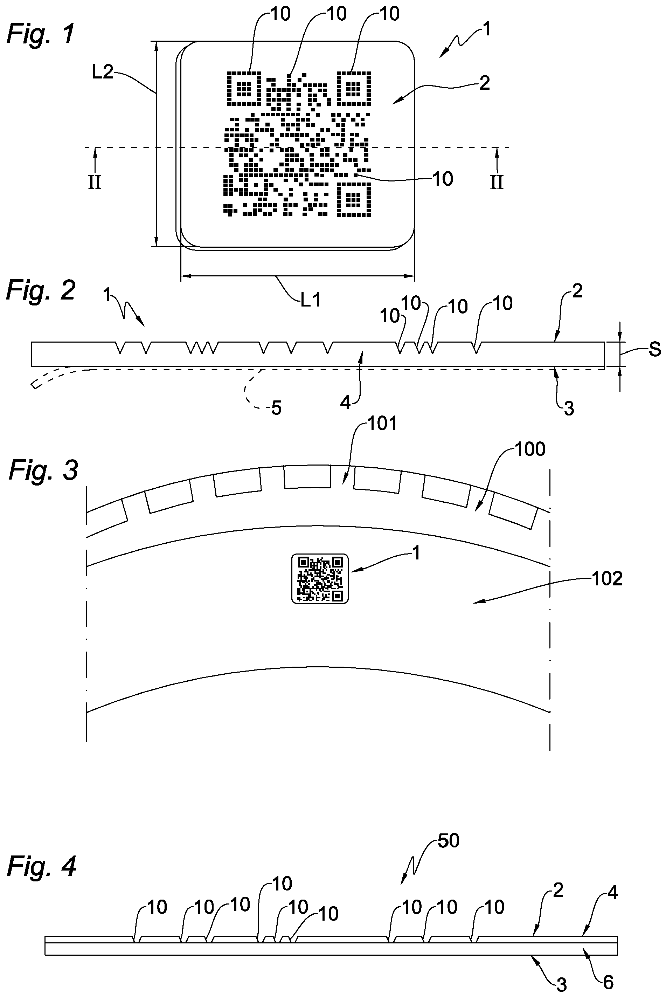

With initial reference to Figures 1 to 3, there is generally designated 1 a first embodiment of a label for tyres of vehicle wheels which is used in a process for manufacturing tyres according to the present invention.

The label 1 is provided to be applied to a tyre 100, with a structure and configuration which are conventional per **se.**

Therefore, the tyre 100 has a generally toroidal form which extends about a rotation axis and which comprises in a radially external position a tread band 101 which comprises elastomer material and on which there is defined a tread surface which is intended for contact with a road surface, and a pair of sidewalls 102 which are also constructed from elastomer material and which extend from the ends of the tread band towards the rotation axis.

In particular, the sidewalls 102 comprise a layer of elastomer material with a thickness of approximately from 2 to 5 mm, the composition of which is conventional per se.

By way of example, the elastomer material of the sidewalls 102 may therefore comprise:
- BR rubber (polybutadiene) of approximately 45 phr;
- NR rubber (natural rubber) of approximately 55 phr;
- carbon black of approximately 45 phr;
- mineral oil (for example, TDAE oil "Treated Distillated Aromatic Extract" of approximately 10 phr;
- anti-oxidant agents of approximately 6 phr;
- sulphur-based vulcanizing agents of approximately 1.3 phr;
- accelerating agents of approximately 0.7 phr.

The label 1 has a plate-like configuration, extending along two main dimensions and having a third dimension (the thickness) of a lower order.

Therefore, there is defined on the label 1 a pair of main opposing surfaces with a substantially similar shape.

In particular, the main surfaces define an external surface 2 of the label 1 which is intended to remain visible when the label 1 is coupled to a sidewall 102 of the tyre 100 and an internal surface 3 opposite the external surface 2, respectively.

The external surface 2 and the internal surface 3 have a generally quadrangular shape with rounded vertices, with sides having dimensions between 15 and 40 mm, while the thickness of the label 1 is between approximately 0.5 and 1.5 mm.

In the preferred example described herein, the external and internal surfaces 2 and 3 have a substantially square shape with sides of approximately 20 mm, while the thickness of the label 1 is approximately 1 mm. However, the label 1 may have a shape and dimensions which are different in accordance with the information set out thereon and other possible production requirements.

The label 1 has a dark grey colouration substantially identical to that of the sidewall 102.

There are formed at the external surface 2 a plurality of recesses 10 which are generally capable of defining an information item set out on the label 1.

In particular, the recesses 10 are substantially mutually identical and generally define a QR code, on which different information items are set out in relation to the tyre 100, such as, for example, the model, dimensions, load index, speed index, etc.

In particular, the recesses 10 have a substantially frustoconical profile which tapers from a respective base thereof, which is open at the external surface 2, towards the interior of the label 1.

The base of each recess is substantially circular and has a diameter between 0.4 and 0.5 mm.

The recesses 10 are blind-holes, that is to say, they are not open at the internal surface 3, and extend inside the label 1 up to a depth of from 0.5 to 0.7 mm, for example, approximately 0.6 mm.

In other construction variants, the recesses may have mutually different shapes and may be specifically configured to define alphanumerical characters or a design or a logo.

The recesses 10 are formed in a first layer 4 of the label 1.

In particular, in the first embodiment illustrated in Figures 1 to 3, the label 1 is formed only by the first layer 4, thus having chemical/physical characteristics which are substantially homogeneous.

The first layer 4 (and consequently the entire label 1) is made from an elastomer material which is compatible with the elastomer material of the sidewall 102 to which the label 1 is intended to be applied. Furthermore, the elastomer material from which the first layer 4 is constructed is partially vulcanized, having a degree of vulcanization corresponding to a value between T₄₀ and T₅₀, as defined by means of the international standard ASTM D5289.

In particular, the elastomer material from which the first layer 4 is constructed comprises an elastomer matrix based on natural rubber (NR) and bromo-isobutylene polymer at a ratio by weight of approximately 1:1 (50 phr of NR and 50 phr of bromo-isobutylene polymer), suitably supplemented with carbon black of a grade ASTM N660 and silica for an overall quantity of approximately 50 phr, and with approximately 1 phr of antioxidant agent Vulkazon AFS, in addition to a vulcanizing agent based on sulphur (approximately 1 phr) and accelerating compounds for the vulcanization.

The label 1 is obtained in the manners described below.

The elastomer compound described above, which is not vulcanized, is subjected to calendering in order to obtain a semi-processed product which is formed by a homogeneous layer of elastomer compound having a desired thickness, in this case of approximately 1 mm, and a suitable length and width, for example, between 0.5 and 2 metres, which are defined by production requirements and the characteristics of the calendering apparatus.

During the calendering, the layer of elastomer compound is further coupled to a support film 5, preferably of PET, at one of the main surfaces thereof. The main surface to which the support film 5 is coupled (indicated in Figure 2 with broken lines) is intended to become the internal surface 3 of the label 1.

After the calendering, the semi-processed product is heated to a temperature of approximately from 150°C to 170°C for a time between 2 and 4 minutes so as to obtain a degree of cross-linking of the elastomer compound corresponding to a value between T₄₀ and T₅₀.

After the partial vulcanization, there are formed on the main surface of the semi-processed product opposite the support film the plurality of recesses 10 which define the information item to be set out on each label 1 obtained by the semi-processed product. In particular, the recesses are formed by means of laser processing and form a plurality of QR codes which are distributed on the semi-processed product in a suitable manner.

At the end of this step, the semi-processed product is cut so as to obtain a respective label 1 for each plurality of recesses 10.

Each label 1 is therefore ready to be applied to a sidewall 102 of a green tyre 100.

In particular, the label 1, after the support film 5 has been detached, is applied to the sidewall 102 just before the tyre is inserted in a vulcanization mould.

As a result of the action of the temperature and the pressure present inside the vulcanization mould, the label 1 is integrated in the sidewall 102, also completing the vulcanization of the elastomer compound thereof. Particularly during this step, there also occurs the formation of cross-linking bridges between the elastomer compound of the label 1 and the elastomer compound of the sidewall 102, improving the adhesion and integration of the label 1 in the sidewall 102.

Figure 4 illustrates a second embodiment of the label according to the present invention which is generally designated 50 and in which similar components to the first embodiment are indicated with the same reference numerals.

Similarly to the label 1, the label 50 also comprises an external surface 2, an opposite internal surface 3 and a plurality of recesses 10 which are formed on the external surface 2, but without passing through the label over the entire thickness thereof, and open at the internal surface 3.

The label 50 differs from the label 1 mainly in that it also comprises, in addition to the first layer 4, a second layer 6 which is connected to the first layer 4 at the opposite side to the external surface 2 of the label 50.

In this manner, the first layer 4 comprises the external surface 2 while the second layer 6 comprises the internal surface 3.

The second layer 6 comprises an elastomer compound which is substantially identical to that of the first layer 4, but to which there is added a suitable colourant so as to make the colour of the second layer 6 substantially different from that of the first layer 4.

Furthermore, the recesses 10 extend inside the label 1 over the entire thickness of the first layer 4 until they reach the second layer 6.

In this manner, the colouration of the second layer 6 is made visible through the recesses 10.

The label 50 is obtained substantially in the same manner as the label 1, with the difference of the provision of a separate elastomer compound for the second layer 6 which is then obtained and coupled to the first layer 4 in a calendering step.

The support film 5 is coupled at the side of the second layer 6 and the recesses 10 are formed, for example, by means of laser processing, in such a manner that the second layer 6 is reached.

The application of the label 50 to the sidewall of a tyre is carried out in the same manners described above in relation to the label 1.

### EXAMPLE

A label obtained according to the first embodiment (label 1) described above has been applied to the sidewall of a green tyre A for motor vehicles, having the elastomer composition indicated above, and moulded and vulcanized together with the tyre in order to fix it thereto (tyre A).

In a generally similar manner, there is then fixed to a sidewall of a green tyre B (identical to the tyre A) a label which is similar to the label 1 of the first embodiment but which is obtained using the same elastomer compound as the sidewall of the tyre B.

The tyres A and B obtained in this manner have therefore been subjected to a combined test for fatigue resistance and ageing.

In particular, each tyre has been inflated to a pressure of approximately 260 KPa and, once mounted on a suitable measuring apparatus, has been rotated in order to simulate a constant speed of 120 Km/h under a weight of approximately 50% of the load index thereof. At the same time, at the sidewall of the tyre to which the label has been applied, there has been supplied a continuous flow of approximately 300 Nl/h of air enriched with ozone (at a concentration of approximately 3 g/m³) in a confined environment with controlled temperature.

After 200 hours of operation, the two tyres A and B have been examined.

In particular, in both the tyres A and B there has been found the substantial absence of cracking, both in the sidewall and in the label, and the complete adhesion of the respective label to the sidewall.

It has further been found that the colouration of the label and the sidewall were substantially identical in the tyre B, while in the tyre A the label had maintained a colouration very similar to the starting colouration with respect to the sidewall which was instead partially discoloured following the action of ozone.

The test has proved that both the labels are suitable for being used on the sidewall of a tyre and that the label produced according to the first embodiment is highly resistant to the effects of ageing, even more resistant than the sidewall of the tyre to which it is applied.

## Claims

1. A process for manufacturing a tyre for vehicle wheels comprising:
- building a green tyre (100),
- applying to a sidewall (102) of said green tyre a label (1; 50) comprising:
• at least a first layer (4) which is made of an elastomer material which is compatible with the elastomer material of a sidewall (102) of said tyre,
• an external surface (2) which is intended to remain visible when said label is coupled to said sidewall,
• a plurality of recesses (10) which are formed at said external surface (2) and which are capable of generally defining at least one portion of information which is set out on said label,
• wherein said elastomer material of which said at least one first layer is made comprises a quantity of a halogenated isobutylene polymer greater than 5 phr,
- moulding and vulcanizing said green tyre (100).

2. A process according to claim 1, wherein said elastomer material of which said at least one first layer (4) is made comprises a quantity of a halogenated isobutylene polymer greater than 10 phr, more preferably greater than 30 phr.

3. A process according to claim 1 or claim 2, wherein said elastomer material of which said at least one first layer (4) is made comprises at least one diene polymer and said halogenated isobutylene polymer at a weight ratio between 20/80 and 80/20, more preferably between 40/60 and 60/40.

4. A process according to any one of the preceding claims, wherein said halogenated isobutylene polymer is based on isobutylene bromide.

5. A process according to any one of the preceding claims, wherein said first layer (4) is partially vulcanized and has a degree of vulcanization corresponding to a value between T₃₀ and T₆₀.

6. A process according to any one of the preceding claims, wherein there is defined on said label (1; 50) an internal surface (3) opposite said external surface (2) and said recesses are not open at said internal surface (3).

7. A process according to any one of the preceding claims, wherein said recesses (10) have a substantially frustoconical profile which tapers from said external surface (2) towards the inside of said label (1; 50).

8. A process according to any one of the preceding claims, wherein said recesses (10) form a QR code.

9. A process according to any one of the preceding claims, wherein said elastomer material of which said first layer (4) is made comprises a vulcanizing agent in a quantity between 0.3 and 3.0 phr.

10. A process according to any one of the preceding claims, wherein said elastomer material of which said first layer (4) is made comprises antioxidant agents in a quantity between 1 phr and 10 phr.

11. A process according to any one of the preceding claims, wherein said at least one first layer (4) has a surface extent equal to the surface extent of said label (1; 50).

12. A process according to any one of the preceding claims, wherein said at least one first layer (4) comprises said external surface (2).

13. A process according to any one of the preceding claims, wherein said at least one first layer (4) comprises said internal surface (3).

14. A process according to any one of the preceding claims, wherein said at least one first layer (4) comprises both said external surface (2) and said internal surface (3) of said label.

## Patentansprüche

1. Prozess zum Herstellen eines Reifens für Fahrzeugräder, umfassend:
- Herstellen eines Rohreifens (100),
- Aufbringen eines Etiketts (1; 50) auf eine Seitenwand (102) des Rohreifens, das Folgendes umfasst:
- mindestens eine erste Schicht (4), die aus einem Elastomermaterial hergestellt ist, das mit dem Elastomermaterial einer Seitenwand (102) des Reifens kompatibel ist,
- eine Außenfläche (2), die sichtbar bleiben soll, wenn das Etikett mit der Seitenwand gekoppelt wird,
- eine Vielzahl von Aussparungen (10), die an der Außenfläche (2) gebildet sind und die in der Lage sind, mindestens einen Teil von Informationen, die auf dem Etikett angegeben sind, allgemein zu definieren,
- wobei das Elastomermaterial, aus dem die mindestens eine erste Schicht hergestellt ist, eine Menge eines halogenierten Isobutylenpolymers von mehr als 5 phr umfasst,
- Formen und Vulkanisieren des Rohreifens (100).

2. Prozess nach Anspruch 1, wobei das Elastomermaterial, aus dem die mindestens eine erste Schicht (4) hergestellt ist, eine Menge eines halogenierten Isobutylenpolymers von mehr als 10 phr, bevorzugter mehr als 30 phr umfasst.

3. Prozess nach Anspruch 1 oder Anspruch 2, wobei das Elastomermaterial, aus dem die mindestens eine erste Schicht (4) hergestellt ist, mindestens ein Dienpolymer und das halogenierte Isobutylenpolymer in einem Gewichtsverhältnis zwischen 20/80 und 80/20, bevorzugter zwischen 40/60 und 60/40 umfasst.

4. Prozess nach einem der vorstehenden Ansprüche, wobei das halogenierte Isobutylenpolymer auf Isobutylenbromid basiert.

5. Prozess nach einem der vorstehenden Ansprüche, wobei die erste Schicht (4) teilweise vulkanisiert ist und einen Vulkanisationsgrad aufweist, der einem Wert zwischen T₃₀ und T₆₀ entspricht.

6. Prozess nach einem der vorstehenden Ansprüche, wobei auf dem Etikett (1; 50) eine Innenfläche (3) gegenüber der Außenfläche (2) definiert ist und die Aussparungen an der Innenfläche (3) nicht offen sind.

7. Prozess nach einem der vorstehenden Ansprüche, wobei die Aussparungen (10) ein im Wesentlichen kegelstumpfförmiges Profil aufweisen, das sich von der Außenfläche (2) zur Innenseite des Etiketts (1; 50) verjüngt.

8. Prozess nach einem der vorstehenden Ansprüche, wobei die Aussparungen (10) einen QR-Code bilden.

9. Prozess nach einem der vorstehenden Ansprüche, wobei das Elastomermaterial, aus dem die erste Schicht (4) hergestellt ist, ein Vulkanisationsmittel in einer Menge zwischen 0,3 und 3,0 phr umfasst.

10. Prozess nach einem der vorstehenden Ansprüche, wobei das Elastomermaterial, aus dem die erste Schicht (4) hergestellt ist, Antioxidationsmittel in einer Menge zwischen 1 phr und 10 phr umfasst.

11. Prozess nach einem der vorstehenden Ansprüche, wobei die mindestens eine erste Schicht (4) eine Oberflächenausdehnung gleich der Oberflächenausdehnung des Etiketts (1; 50) aufweist.

12. Prozess nach einem der vorstehenden Ansprüche, wobei die mindestens eine erste Schicht (4) die Außenfläche (2) umfasst.

13. Prozess nach einem der vorstehenden Ansprüche, wobei die mindestens eine erste Schicht (4) die Innenfläche (3) umfasst.

14. Prozess nach einem der vorstehenden Ansprüche, wobei die mindestens eine erste Schicht (4) sowohl die Außenfläche (2) als auch die Innenfläche (3) des Etiketts umfasst.

## Revendications

1. Processus de fabrication d'un pneu pour roues de véhicule, comprenant :
- la construction d'un pneu vert (100),
- l'application sur un flanc (102) dudit pneu vert d'une étiquette (1 ; 50) comprenant :
- au moins une première couche (4) qui est constituée d'un matériau élastomère qui est compatible avec le matériau élastomère d'un flanc (102) dudit pneu,
- une surface externe (2) qui est destinée à rester visible lorsque ladite étiquette est couplée audit flanc,
- une pluralité d'évidements (10) qui sont formés sur ladite surface externe (2) et qui sont aptes à définir généralement au moins une portion d'informations qui figurent sur ladite étiquette,
- dans lequel ledit matériau élastomère constituant ladite au moins une première couche comprend une quantité d'un polymère d'isobutylène halogéné supérieure à 5 pce,
- le moulage et la vulcanisation dudit pneu vert (100).

2. Processus selon la revendication 1, dans lequel ledit matériau élastomère constituant ladite au moins une première couche (4) comprend une quantité d'un polymère d'isobutylène halogéné supérieure à 10 pce, plus préférentiellement supérieure à 30 pce.

3. Processus selon la revendication 1 ou 2, dans lequel ledit matériau élastomère constituant ladite au moins une première couche (4) comprend au moins un polymère diène et ledit polymère d'isobutylène halogéné dans un rapport pondéral compris entre 20/80 et 80/20, plus préférentiellement entre 40/60 et 60/40.

4. Processus selon l'une quelconque des revendications précédentes, dans lequel ledit polymère d'isobutylène halogéné est à base de bromure d'isobutylène.

5. Processus selon l'une quelconque des revendications précédentes, dans lequel ladite première couche (4) est partiellement vulcanisée et présente un degré de vulcanisation correspondant à une valeur comprise entre T₃₀ et T₆₀.

6. Processus selon l'une quelconque des revendications précédentes, dans lequel une surface interne (3) opposée à ladite surface externe (2) est définie sur ladite étiquette (1 ; 50) et lesdits évidements ne sont pas ouverts au niveau de ladite surface interne (3).

7. Processus selon l'une quelconque des revendications précédentes, dans lequel lesdits évidements (10) présentent un profil sensiblement tronconique qui s'étrécit depuis ladite surface externe (2) vers l'intérieur de ladite étiquette (1 ; 50).

8. Processus selon l'une quelconque des revendications précédentes, dans lequel lesdits évidements (10) forment un code QR.

9. Processus selon l'une quelconque des revendications précédentes, dans lequel ledit matériau élastomère constituant ladite première couche (4) comprend un agent de vulcanisation dans une quantité comprise entre 0,3 et 3,0 pce.

10. Processus selon l'une quelconque des revendications précédentes, dans lequel ledit matériau élastomère constituant ladite première couche (4) comprend des agents antioxydants dans une quantité comprise entre 1 pce et 10 pce.

11. Processus selon l'une quelconque des revendications précédentes, dans lequel ladite au moins une première couche (4) présente une étendue de surface égale à l'étendue de surface de ladite étiquette (1 ; 50).

12. Processus selon l'une quelconque des revendications précédentes, dans lequel ladite au moins une première couche (4) comprend ladite surface externe (2).

13. Processus selon l'une quelconque des revendications précédentes, dans lequel ladite au moins une première couche (4) comprend ladite surface interne (3).

14. Processus selon l'une quelconque des revendications précédentes, dans lequel ladite au moins une première couche (4) comprend à la fois ladite surface externe (2) et ladite surface interne (3) de ladite étiquette.
